Europäisches Patentamt

European Patent Office

Office européen des brevets

(11) Publication number: **0 226 697 B1**

# EUROPEAN PATENT SPECIFICATION

(45) Date of publication of patent specification: **27.03.91**  (51) Int. Cl.⁵: **G02F 1/133**

(21) Application number: **86107805.3**

(22) Date of filing: **07.06.86**

(54) **Construction of liquid crystal cell.**

(30) Priority: **20.12.85 JP 195240/85**

(43) Date of publication of application:
**01.07.87 Bulletin 87/27**

(45) Publication of the grant of the patent:
**27.03.91 Bulletin 91/13**

(84) Designated Contracting States:
**DE FR IT NL**

(56) References cited:
**AT-B- 307 522**
**DE-A- 2 242 389**
**DE-A- 2 738 305**
**DE-A- 3 400 429**
**GB-A- 2 102 977**

(73) Proprietor: **Stanley Electric Co., Ltd.**
**2-9-13, Nakameguro**
**Meguro-ku Tokyo 153(JP)**

(72) Inventor: **Aizawa, Masanobu**
**Stanley Electric Co., Ltd. 2-9-13, Nakameguro**
**Meguro-ku Tokyo(JP)**
Inventor: **Yamauchi, Shigekazu**
**Stanley Electric Co., Ltd. 2-9-13, Nakameguro**
**Meguro-ku Tokyo(JP)**
Inventor: **Hisatake, Yuzo**
**Stanley Electric Co., Ltd. 2-9-13, Nakameguro**
**Meguro-ku Tokyo(JP)**

(74) Representative: **Flach, Dieter Dipl.-Phys. et al**
**Patentanwälte Dipl.-Phys. Dieter Flach**
**Dipl.-Chem. Dr. Steffen Andrae Dipl.-Ing.**
**Dietmar Haug Dipl.-Chem. Dr. Richard**
**Kneissl Prinzregentenstrasse 24**
**W-8200 Rosenheim 24(DE)**

## Description

The invention relates to a liquid crystal cell according to claim 1.

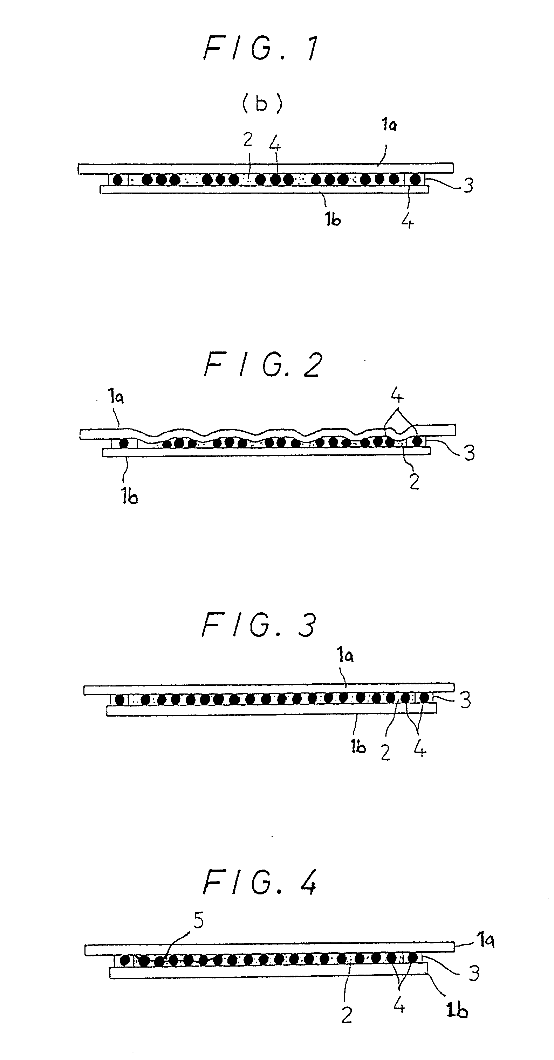

Fig. 3 shows a schematic drawing of the construction of similar conventional art of the liquid crystal cell as known e.g. from GB-A-2 102 977 and DE-A-2242389 and indicates the sectional construction of a liquid crystal cell of the dot matrix display type. In this figure, 1a and 1b are transparent glass substrates, and liquid crystal material 2 is sealed between them with sealing material 3.

In addition, fine grains 4 for gap control are installed over the entire internal surface of transparent glass substrate 1a and 1b. In the liquid crystal cell of the said construction, fine grains 4 for gap control are scattered between transparent glass substrate; hence the interval between the glass substrates 1a and 1b is adjusted at a uniform value. If it is assumed that the fine grains 4 are solid bodies such as glass fiber chips, the accuracy of said substrate interval, namely, gap control accuracy, will be as high as about ± 0.1 to 0.2 μm. Particularly in the liquid crystal cell of the dot matrix display type, a gap control accuracy of ± 0.1 to 0.2 μm is necessary to obtain the prescribed electro-optical characteristics; therefore it is useful to use solid bodies having uniform outside diameters like glass fiber chips for said fine grains 4.

In the conventional liquid crystal cell which has said construction, fine grains 4 for gap control are scattered over the entire surface between said transparent glass plates 1a and 1b. Consequently, in the automobile-use liquid crystal cell, for instance, whose storage temperature rating is as low as -40°C, vacuum bubbles (here they mean spaces in a vacuum state) occur as shown in Fig. 4, thereby posing a problem. Namely, at a low temperature zone of about -40°C, liquid crystal material 2 which has been sealed between the transparent glass substrates 1a and 1b contracts and reduces its volume. At this time the transparent glass substrate 1a or 1b cannot deflect inwards, because fine grains 4 for gap control which are sold bodies and scattered all over its surface result in formation of said vacuum bubbles 5. Further if the scattered quantity of fine grains 4 for gap control is reduced, the pitch of fine grains 4 is widened, and between this widened pitch of fine grains 4, the transparent glass substrate 1a can deflect inwards. In such a case, however, pressure is applied to the respective fine grains at the pressurizing-heating sealing process (reduction in the scattered quantity results in application of higher pressure to each particle of fine grains 4), and fine grains 4 are broken, thereby posing a problem of failing of obtain uniform gap control accuracy.

The present invention has been made by paying attention to this problem, and provides construction of the liquid crystal cell in which no vacuum bubbles occur between substrates even at the low temperature zone, and unform accuracy of gap control between substrates is ensured.

The construction of the liquid crystal cell of the present invention features that when liquid crystal material is sealed between two opposing transparent substrates, fine grains for making uniform the substrate interval are scattered on the surface of the transparent substrate at a plural number of small areas, which are installed at appropriate intervals.

Since the fine grains for gap control are scattered in plural small areas which are installed at appropriate intervals, the transparent substrate can deflect inwards at the interval between the small areas (at a portion where no fine grains have been scattered) even at the low temperature zone, thereby preventing the formation of vacuum bubbles. In addition, since it is possible to scatter a sufficient quantity of fine grains in the respective small areas, no damage occurs to the fine grains and high accuracy of gap control can be obtained.

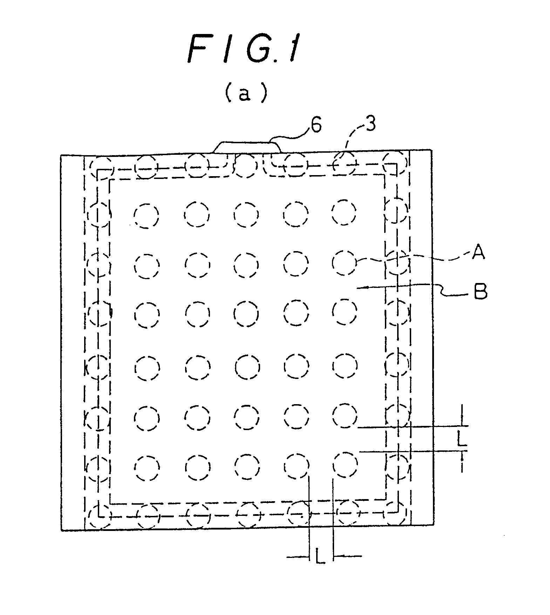

Fig. 1 is a schematic illustration showing an example of embodiment of the present invention. Fig. 1 (a) is a plan view of the liquid crystal cell; Fig. 1 (b) shows its sectional construction. Fig. 2 shows the sectional construction of the liquid crystal cell at a low temperature. Fig. 3 shows the sectional view of the example of conventional liquid crystal cell. Fig. 4 shows the state of occurrences of vacuum bubbles.

An embodiment of the present invention is explained below by referring to drawings.

Fig. 1 is a schematic illustration showing the construction of the liquid crystal cell according to the present invention. Fig. 1 (a) is its plan view; Fig. 1 (b) shows its sectional construction: In the figure 1a and 1b are transparent glass substrates, 2 is liquid crystal material which has been sealed between the transparent glass substrates 1a and 1b with sealing material 3 and end sealing material 6. Fine grains 4 for gap control are made of particles having uniform outside diameters and installed on the internal surface of the transparent glass substrate 1b.

These fine grains 4 consist of solid bodies like glass fiber chips, which are demarcated into a plural number of small areas A as shown in Fig. 1 (a). Further, fine grains 4 in the respective small areas are scattered at an average pitch of 1 mm or below, and form, in their entirety, a small area of 100 mm² or below in a circular form (a polygonal form also will do).

Said construction of the liquid crystal cell, in which solid fine grains like glass fiber chips are scattered on the internal surface of the transparent glass substrate 1, ensures high gap-control accuracy (for instance, ± 0.1 to 0.2 μm). Further at the low temperature zone (for instance, at - 40°C), liquid crystal material 2 contracts and reduces its volume. At this time, the transparent substrate 1 can deflect inwards at position B where fine grains 4 for gap control have not been scattered as shown in Fig. 2. Namely, since the transparent glass substrate 1 deflects inwards following the volumetric reduction of the said liquid crystal material 2, no vacuum bubbles 5 will occur as previously.

Namely, the construction of the present invention satisfies both the requirements of achieving high-accuracy gap control and preventing the formation of vacuum bubbles 5, and simultaneously satisfies the following two contradicting conditions:

a. To enhance gap control accuracy, it is necessary to scatter solid fine grains 4, which have uniform outside diameters, as much as possible.

b. To prevent the formation of vacuum bubbles at low temperature, it is necessary to scatter fine grains 4 for gap control at a pitch as wide as possible possible, so that the transparent glass substrate 1 can deflect inwards at intervals between small areas which have been scattered with the fine grains 4, following the contraction of liquid crystal material 2.

The reason for scattering the fine grains for gap control at an average pitch of 1 mm or below here is that at the said pressurizing-heating sealing process, pressure applied to each particle of fine grains 4 is weakened to prevent fine grains 4 from being damaged. The reason for making the small areas A into circular or polygonal shapes each having a small area of 100 mm² or below and for setting the interval between two small areas to 2 mm or above is to form a good balance between portions where deflection of the transparent glass substrate 1 is impossible (at small area A where the pitch of fine grains 4 is 1 mm or below) at low temperature and portions where such deflection is possible (at interval B of 2 mm or above where no fine grains 4 exists). Results of a test have confirmed that vacuum bubbles are liable to occur at a low temperature of - 40°C, when small area A becomes larger than 100 mm², and their interval L becomes smaller than 2 mm.

The method of installing fine grains 4 for gap control by demarcating them into small areas A includes, for instance, the method of scattering said fine grains on the transparent glass substrate 1 through a mask made of a flat plate with small holes arranged in a regular pattern.

Although the present invention is particularly useful for the liquid crystal cell of the dot matrix display system, it can demonstrate a useful effect also for general types of liquid crystl cells.

As explained above, the present invention is effective in preventing the formation of vacuum bubbles at the low-temperature zone and, moreover, in enhancing the accuracy of the substrate interval, because fine grains for gap control are installed on the internal surface of the transparent substrate by scattering them at plural small areas and an appropriate interval is provided betweeen the respective two small areas.

## Claims

1. A liquid crystal cell wherein liquid crystal material (2) is sealed between two opposing transparent substrates (1a, lb) and fine grains (4) are arranged between said transparent substrates (1a, lb) for making the substrate interval uniform, characterized in that a plurality of said fine grains (4) are arranged in each of a plurality of small areas (A) of 100 mm² or below, these small areas (A) being separated by intervals (L) of 2 mm or above, which intervals (L) are free of said fine grains (4).

2. A liquid crystal cell as claimed in Claim 1 above wherein said fine grains (4) are demarcated in plural small areas (A) of circular polygonal shapes.

3. A liquid crystal cell as claimed in Claim 1 or 2 above wherein fine grains (4) in the respective small areas (A) are installed at an average pitch of about 1 mm or below.

## Revendications

1. Une cellule à cristaux liquides dans laquelle une matiére à cristaux liquides (2) est enfermée de façon êtanche entre deux substrats transparents opposés (la, lb), et des grains fins (4) sont disposés entre les substrats transparents (1a, 1b) pour uniformiser l'intervalle entre les substrats, caractérisée en ce qu'un ensemble des grains fins (4) sont disposés dans chaque zone parmi un ensemble de petites zones (A) de 100 mm² ou moins, ces petites zones (A) étant séparées par des intervalles (L) de 2 mm ou plus dans lesquels il n'y a pas de grains fins (4).

2. Une cellule à cristaux liquides selon la revendication 1, dans laquelle les grains fins (4) sont disposés dans un ensemble de petites zones (A) ayant des formes circulaires ou polygonales.

3.  Une cellule à cristaux liquides selon la revendication 1 ou 2, dans laquelle les grains fins (4) qui se trouvent dans les petites zones (A) respectives sont disposés avec un pas moyen d'environ 1 mm ou moins.

**Ansprüche**

1.  Flüssigkristallzelle, bei der Flüssigkristallmaterial (2) zwischen zwei gegenüberliegenden transparenten Substratträgern (1a, lb) gedichtet und feine Körner (4) zwischen den transparenten Substratträgern (1a, lb) angeordnet sind, um den Substratabstand gleichförmig zu machen, **dadurch gekennzeichnet**, daß eine Vielzahl von feinen Körnern (4) in jedem von mehreren kleinen Bereichen (A) von 100 mm$^2$ oder weniger angeordnet sind, wobei diese kleinen Bereiche (A) durch Abstände (L) von 2 mm oder mehr getrennt sind, und die Abstände (L) frei von diesen feinen Körnern (4) sind.

2.  Flüssigkristallzelle nach Anspruch 1, wobei die feinen Körner (4) in mehreren kleinen Bereichen (A) mit Kreis- oder Polygonalform begrenzt sind.

3.  Flüssigkristallzelle nach Anspruch 1 oder 2, wobei die feinen Körner (4) in den jeweiligen kleinen Bereichen (A) in einem Durchschnitts-Abstand von ungefähr 1 mm oder darunter eingesetzt sind.

# F I G. 1

## ( a )

FIG. 1

(b)

FIG. 2

FIG. 3

FIG. 4